# EUROPÄISCHE PATENTSCHRIFT

(11) **EP 2 177 654 B1**
(45) Veröffentlichungstag und Bekanntmachung des Hinweises auf die Patenterteilung: **24.07.2013**
(21) Anmeldenummer: 08018308.0
(22) Anmeldetag: 20.10.2008
(51) Int. Cl.: B32B 7/14, B32B 27/12, B32B 27/28, B32B 5/02, B32B 5/04

(54) **Verfahren zur Herstellung eines Vliesverbundmaterials sowie Vorrichtung zur Durchführung des Verfahrens**
Method for manufacturing a non-woven fabric compound material and device for executing the method
Procédé de fabrication d'un matériau composite en non-tissé et dispositif d'exécution du procédé

(43) Veröffentlichungstag der Anmeldung: 21.04.2010
(73) Patentinhaber: Mondi Consumer Packaging Technologies GmbH, 48599 Gronau (DE)
(72) Erfinder: Schönbeck, Marcus, 33775 Versmold (DE); Baldauf, Georg, 48366 Laer (DE)
(74) Vertreter: Albrecht, Rainer Harald

(56) Entgegenhaltungen:
- US-A1- 2004 127 128
- US-A1- 2005 148 263

## Beschreibung

Die Erfindung betrifft ein Verfahren zur Herstellung eines elastischen Vliesverbundmaterials, sowie eine Vorrichtung zur Durchführung des Verfahrens. Abschnitte eines solchen Vliesverbundmaterials sind beispielsweise für die Fertigung von Hygieneprodukten geeignet, die elastische Eigenschaften aufweisen sollen. So können aus dem Vliesverbundmaterial elastische Verschlussstreifen oder Windelohren von Windeln gebildet werden. Bei derartigen Produkten wird in der Praxis häufig eine weiche Oberfläche aus einem Vliesmaterial gefordert. Entsprechende Außenlagen sind beispielsweise vorteilhaft, um bei einem direkten Hautkontakt die Gefahr einer Reizung zu vermeiden oder zu verringern. Auch werden Oberflächen aus Vliesmaterial, die vergleichsweise weich sind, unabhängig von ihrer technischen Zweckmäßigkeit von den Kunden oft als besonders hochwertig und vorteilhaft wahrgenommen.

Bei der Verarbeitung von elastischen Folien besteht allgemein das Problem, dass diese aufgrund des klebrigen Charakters der elastischen Rohstoffe bei einem Aufwickeln auf einer Rolle leicht verblocken. Um ein Verblocken elastischer Folien zu vermeiden ist bekannt, diese mit einem Trennpapier, welches bei der weiteren Verarbeitung aufwendig entfernt werden muss, oder einem Puder, welches die weitere Verarbeitung und insbesondere ein Verkleben der elastischen Folie erschwert, zu versehen.

Aus der EP 1 686 209 B1 ist des Weiteren bekannt, eine elastische Folie unmittelbar nach der Extrusion mit zumindest einer Außenschicht aus Nonwoven zu versehen, die von einer Rolle abgezogen und durch Extrusionskaschieren oder Hotmelt-Klebstoff mit der elastischen Folie verbunden wird. Bei dem Aufrollen des so gebildeten elastischen Laminates bildet die zumindest eine Schicht aus Nonwoven innerhalb der Rolle eine Trennschicht und verhindert ein Verblocken der klebrigen elastomeren Folie. Nachteilig ist, dass durch die zugeführte Schicht aus Nonwoven die elastischen Eigenschaften des Laminates erheblich beeinträchtigt werden.

Aus der EP 1 462 556 B1 ist ein Verfahren zur Herstellung einer elastischen Verbundfolie mit textiler Oberfläche bekannt, wobei ein elastischer Träger mit Kurzfasern versehen wird. Bei einer nicht vollflächigen Verklebung können sich große Teile des Fasermaterials lösen und sich in unerwünschter Weise von dem Verbundmaterial trennen.

Vor diesem Hintergrund liegt der Erfindung die Aufgabe zugrunde, ein Verfahren zur Herstellung eines elastischen Vliesverbundmaterials anzugeben, welches kostengünstig durchgeführt werden kann, wobei gleichzeitig das Vliesverbundmaterial gute elastische Eigenschaften aufweisen und ohne die Gefahr eines Verblockens auf eine Rolle aufwickelbar sein soll.

Zur Lösung dieser Aufgabe ist gemäß einer ersten Alternative ein Verfahren zur Herstellung eines Vliesverbundmaterials vorgesehen, bei dem eine elastische Folie zugeführt und abschnittsweise mit Klebstoff versehen wird und bei dem mit einer Meltblown-Vorrichtung eine Schicht aus Meltblown-Nonwoven erzeugt und ohne vorherige Verfestigung unmittelbar auf die elastische Folie abgelegt und durch den Klebstoff abschnittsweise mit der elastischen Folie verbunden wird.

Gemäß einer zweiten Alternative wird zur Lösung der zugrunde liegenden Aufgabe das Verfahren zur Herstellung eines elastischen Vliesverbundmaterials derart durchgeführt, dass eine elastische Folie zugeführt und abschnittsweise mit Klebstoff versehen wird, dass mit einer Meltblown-Vorrichtung eine Schicht aus Meltblown-Nonwoven erzeugt und ohne vorherige Verfestigung unmittelbar auf eine Transporteinrichtung abgelegt wird und dass die Schicht aus Meltblown-Nonwoven mittels der Transporteinrichtung weitgehend frei von Zugkräften der elastischen Folie zugeführt und durch den Klebstoff abschnittsweise mit der elastischen Folie verbunden wird. Als Transporteinrichtung ist dabei vorzugsweise eine rotierende Walze oder ein umlaufendes Band vorgesehen, wobei die Schicht aus Meltblown-Nonwoven von der Walze beziehungsweise dem Band unmittelbar auf die abschnittsweise mit Klebstoff versehene elastische Folie aufgelegt wird.

Die Meltblown-Extrusion der Schicht aus Meltblown-Nonwoven erfolgt zweckmäßigerweise derart, dass Fasern gebildet werden, die von einem Luftmesser in Stücke getrennt werden. Die Meltblown-Vorrichtung umfasst dabei üblicherweise einen Extruder mit einer Düse, die aus mehreren nebeneinander angeordneten Löchern gebildet ist. Unmittelbar nach dem Verlassen der Extrusionsdüse werden die schmelzflüssigen, aus den Löchern austretenden, Polymerstränge mit Druckluft beaufschlagt und gestreckt.

Erfindungswesentlich ist, dass die gebildete Schicht aus Meltblown-Nonwoven unmittelbar auf die elastische Folie oder die Transporteinrichtung, mit der die gebildete Schicht frei oder zumindest weitgehend frei von Zugkräften der elastischen Folie zugeführt werden kann, aufgelegt wird. Da die flächige Nonwoven-Schicht nicht auf- und abgerollt wird und auch keine Führung der Nonwoven-Schicht unter Zugspannung vorgesehen ist, kann diese mit einer geringen Festigkeit und insbesondere mit einem geringen Flächengewicht gebildet werden. In diesem Zusammenhang zeichnen sich Meltblow-Fasern dadurch aus, dass sie vergleichsweise dünn sind und bereits bei einem geringen Flächengewicht eine gute homogene Bedeckung der elastischen Folie und ein besonders weiches Erscheinungsbild mit einer aus Sicht eines Benutzers geschlossenen textilen Schicht erreicht werden können.

Im Rahmen der Erfindung wird vorzugsweise ein nichtelastisches, thermoplastisches Polymer als Material für die Schicht aus Meltblown-Fasern verwendet, welches üblicherweise im Vergleich zu elastischen Materialen oder Mehrkomponentenfasern mit einem elastischen Kern leicht zu verarbeiten ist und bei einem Aufwickeln des Vliesverbundmaterials zuverlässig ein Verblocken verhindert. Als unelastisches Material können beispielsweise Polyolefine wie Polypropylen, Polyethylen aber auch Polyamid oder Polyethylenterephthalat eingesetzt werden.

Gemäß der vorliegenden Erfindung können erhebliche Kostenersparnisse erreicht werden, da die Schicht aus Meltblown-Nonwoven mit einem geringen Flächengewicht aus einem kostengünstigen thermoplastischen Material gefertigt werden kann. Da die Meltblown-Fasern sich bei einer Dehnung des Laminates zwischen den mit Klebstoff versehenen Bereichen auch besonders leicht zerfasern lassen, werden die elastischen Eigenschaften der Folie nicht wesentlich beeinträchtigt. Insbesondere wird auch die für eine Dehnung erforderliche Zugkraft nicht übermäßig erhöht. Durch die Fixierung der Schicht aus Meltblown-Nonwoven an den mit Klebstoffen versehenen Bereichen kann aber trotz des Zerfaserns weitgehend ein Herauslösen und ein Verlust von Fasern bei einem Dehnen vermieden werden.

Das erfindungsgemäße Laminat kann insbesondere so ausgebildet werden, dass vor einer Benutzung, beispielsweise als elastischer Verschlussstreifen an einer Windel, keine vorherige Dehnung zur Aktivierung erforderlich ist. Im Rahmen der Erfindung liegt aber auch, das elastische Laminat, wie aus dem Stand der Technik bekannt, mit einem weiteren Nonwoven-Material, beispielsweise einem SMS-Nonwoven (dreischichtiger Verbund mit einer Schicht aus Meltblown-Fasern zwischen Außenschichten aus Spunbond-Fasern), zu verbinden. Die Kaschierung mit einem zusätzlichen Nonwoven-Material ist zweckmäßig, um die Reißfestigkeit zu erhöhen. Um dann jedoch eine ausreichende Dehnbarkeit zu gewährleisten, ist in der Regel eine Aktivierung, das heißt eine Vordehnung, die beispielsweise in einem Walzenspalt konturierter, ineinandergreifender Walzen erfolgen kann, zweckmäßig. Durch die Vordehnung des Materiales können insbesondere auch elastische und im Wesentlichen unelastische Bereiche und eine Dehngrenze festgelegt werden.

Besonders vorteilhaft ist eine Ausgestaltung, bei der das erfindungsgemäße elastische Vliesverbundmaterial eine unmittelbar aufgebrachte Schicht aus Meltblown-Nonwoven aufweist, wobei das zusätzliche Nonwoven-Material auf der gegenüberliegenden Seite der elastischen Folie befestigt wird. Im Rahmen einer solchen Ausgestaltung können besonders kostengünstig Verschlussstreifen gebildet werden, die durch das zusätzliche Nonwoven-Material eine erhöhte Festigkeit und eine definierte Dehngrenze aufweisen und gleichzeitig auf beiden Seiten mit Nonwoven versehen sind und so ein hochwertiges Aussehen und eine angenehme Haptik aufweisen.

Gemäß einer bevorzugten Ausgestaltung des erfindungsgemäßen Verfahrens wird die elastische Folie in einem ersten Verfahrensschritt durch Flachfolienextrusion gebildet und direkt nachfolgend mit Klebstoff versehen, ohne zuvor auf- oder abgewickelt zu werden. Gemäß der beschriebenen Ausgestaltung erfolgen die verschiedenen Verfahrensschritte in direkter Abfolge, ohne dass eine Zwischenlagerung oder ein Transport vorgesehen sind.

Als Klebstoff wird vorzugsweise ein Hotmelt-Klebstoff verwendet, der beispielsweise mittels Hotmelt-Düsen abschnittsweise auf die elastische Folie aufgebracht wird. Besonders bevorzugt ist ein Auftrag des Klebstoffs in Streifen, die in Längsrichtung der Folie verlaufen. Die Hotmelt-Düse kann dazu auf besonders einfache Weise verschiedene in Querrichtung nebeneinander angeordnete Austrittsöffnungen aufweisen, die jeweils kontinuierlich Klebstoff abgeben. Die beschriebene Ausrichtung der Klebstoffstreifen ist auch besonders vorteilhaft, wenn aus dem Vliesverbundmaterial Abschnitte oder Streifen gebildet werden, die bevorzugt in Querrichtung eine hohe Elastizität aufweisen. Im Rahmen einer solchen Ausgestaltung wird die Elastizität durch die dann senkrecht zu der Dehnungsrichtung ausgerichteten Klebstoffstreifen nicht übermäßig beeinträchtigt. Auch wenn der Hotmelt-Klebstoff selbst unelastisch oder weitgehend unelastisch ist, können die zwischen den in Längsrichtung verlaufenden Klebstoffstreifen angeordneten klebstofffreien Bereiche in Querrichtung leicht gedehnt werden. Neben völlig geraden Klebstoffstreifen ist auch eine Ausbildung möglich, bei der die Klebstoffstreifen in Wellen-, Spiral- oder Zackenform verlaufen. Dadurch kann vermieden werden, dass bei der Bildung einzelner in Querrichtung dehnbarer Streifen aus dem Vliesverbundmaterial die seitlichen Ränder unzureichend befestigt sind. Dabei können auch Überschneidungen der Klebstoffstreifen vorgesehen sein, so dass, beispielsweise bei Klebstoffstreifen in Spiralform, netzartige Strukturen gebildet werden.

Die elastische Folie kann im Rahmen des erfindungsgemäßen Verfahrens auch beidseitig mit einer Schicht aus Meltblown-Nonwoven versehen werden, wobei das unmittelbare Auflegen der Schichten aus Meltblown-Nonwoven auf die elastische Folie beziehungsweise die weitgehend zugkraftfreie Zuführung des Meltblown-Nonwovens durch die Transporteinrichtung für die beidseitig vorgesehenen Schichten gleichzeitig oder nacheinander erfolgen kann.

Insbesondere wenn das erfindungsgemäße Vliesverbundmaterial für die Fertigung von Verschlussstreifen an Windeln vorgesehen ist, wird eine sehr große Dehn- und Belastbarkeit der elastischen Folie verlangt. Die elastische Folie besteht dabei vorzugsweise aus einer Monofolie eines thermoplastischen Elastomers, wobei im Besonderen ein Polymer der Gruppe Styrol-Butadien-Styrol-Copolymer (SBS), Styrol-Isopren-Styrol-Block-Copolymer (SIS), Styrol-Ethylen-Buten-Copolymer (SEBS), sonstigen thermoplastischen Styrolelastomer (TPE-S), elastischem Polyolefin-Copolymer, thermoplastischen Polyolefinelastomer (TPE-O), thermoplastischem Polyurethanelastomer (TPE-U), thermoplastischem Polyamidelastomer (TPE-A), thermoplastischem Polyesterelastomer (TPE-E) oder einer Mischung dieser Polymere geeignet ist. Neben der Verwendung von Monofolien können auch mehrschichtig coextrudierte Folien eingesetzt werden. Die Dicke der elastischen Folie liegt im ungedehnten Zustand üblicherweise zwischen 10 µm und 100 µm.

Das erfindungsgemäße Verfahren ermöglicht insgesamt eine kostengünstige Herstellung eines Vliesverbundmaterials, welches sich durch besonders vorteilhafte elastische Eigenschaften auszeichnet. So ist die erfingdungsgemäß unmittelbar oder zugfrei über eine Transporteinrichtung auf der elastischen Folie aufgebrachte Schicht aus Meltblown-Nonwoven ausreichend, um ein Verblocken zu vermeiden und eine für den Benutzer vorteilhafte Oberflächenstruktur zu schaffen, ohne dass die durch die elastische Folie bestimmten elastischen Eigenschaften des Vliesverbundmaterials übermäßig beeinträchtigt werden.

Wenn der Klebstoff in Form von Streifen aufgetragen ist, wird im ungedehnten Zustand eine Seite des Vliesverbundmaterials vollständig von der Schicht aus Meltblown-Nonwoven abgedeckt, während bei einer starken Dehnung das Meltblown-Nonwoven zerfasert und zwischen den Klebstoffstreifen die darunter liegende elastische Folie freigelegt wird. Bei einer elastischen Rückstellung des Vliesverbundmaterials nach Wegfall der Zugkraft wird dann wieder eine vollständig von dem Meltblown-Nonwoven abgedeckte Oberfläche beobachtet, welche jedoch aufgrund der vorherigen Zerfaserung der einzelnen Meltblown-Fasern, die üblicherweise als Endlosfasern extrudiert werden und durch ein Luftmesser in endliche Stücke getrennt werden können, voluminöser ausgebildet ist.

Gegenstand der Erfindung ist auch eine Vorrichtung zur Durchführung des zuvor beschriebenen Verfahrens. Die Vorrichtung umfasst einen Flachfolienextruder zur Bildung der elastischen Folie, eine Einrichtung zum abschnittsweisen Auftrag von Klebstoff und eine Meltblown-Vorrichtung, die derart angeordnet ist, dass eine Schicht aus Meltblown-Nonwoven unmittelbar auf die elastische Folie oder eine Transporteinrichtung ablegbar ist. Wenn vorgesehen ist, dass die gebildete Schicht aus Meltblown-Nonwoven unmittelbar auf die elastische Folie abgelegt wird, ist vorzugsweise im Bereich der Meltblown-Vorrichtung eine Transportvorrichtung derart angeordnet, dass die elastische Folie in dem Bereich, in dem die Schicht aus Meltblown-Nonwoven abgelegt wird, auf der Transportvorrichtung aufliegt. Die Transporteinrichtung ermöglicht dabei eine gleichmäßige Führung und Unterstützung der Bahn der elastischen Folie.

Nachdem die Schicht aus Meltblown-Nonwoven auf die elastische Folie aufgelegt worden ist, wird das Vliesverbundmaterial üblicherweise durch einen Walzenspalt geführt. Dieser Walzenspalt dient vornehmlich dazu das Nonwoven-Material sicher mit dem Klebstoff zu verbinden. Eine darüber hinausgehende Veränderung der Struktur des Vliesverbundmaterials durch die Einwirkung von Druck und/oder Temperatur ist dabei üblicherweise nicht vorgesehen.

Die Erfindung wird im Folgenden anhand einer lediglich ein Ausführungsbeispiel darstellenden Zeichnung erläutert. Es zeigen:
- **Fig. 1a**: Eine Vorrichtung zur Durchführung des erfindungsgemäßen Verfahrens in einer schematischen Darstellung,
- **Fig. 1b**: eine Detailansicht der Vorrichtung gemäß Fig. 1 a in einer perspektivischen Darstellung,
- **Fig. 2**: eine alternative Ausgestaltung der in Fig. 1 a dargestellten Vorrichtung,
- **Fig.3**: eine bevorzugte Weiterbildung der Vorrichtung gemäß der Fig. 2 und
- **Fig. 4a bis 4c**: ein elastisches Vliesverbundmaterial vor, während und nach einer ersten Dehnung.

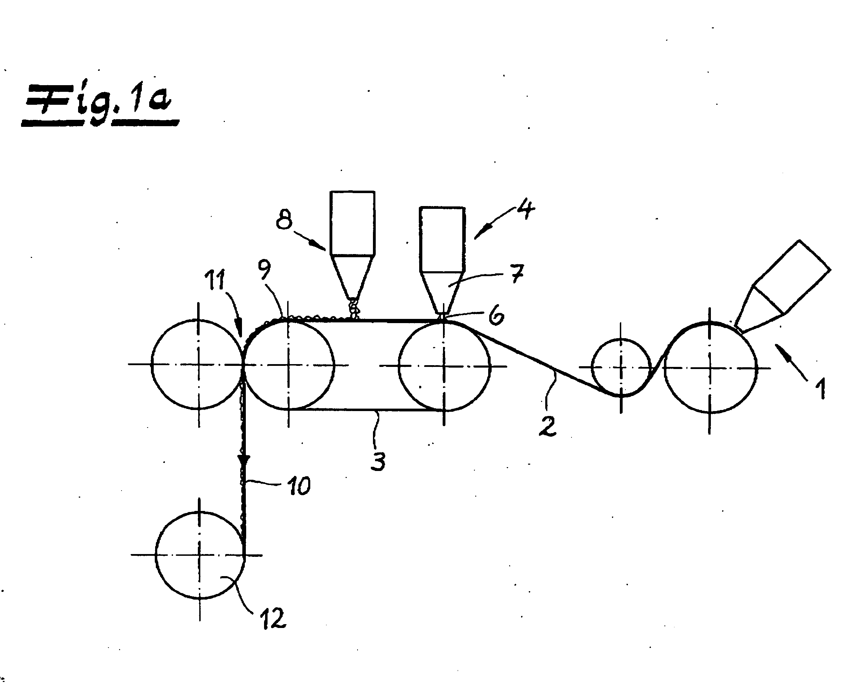

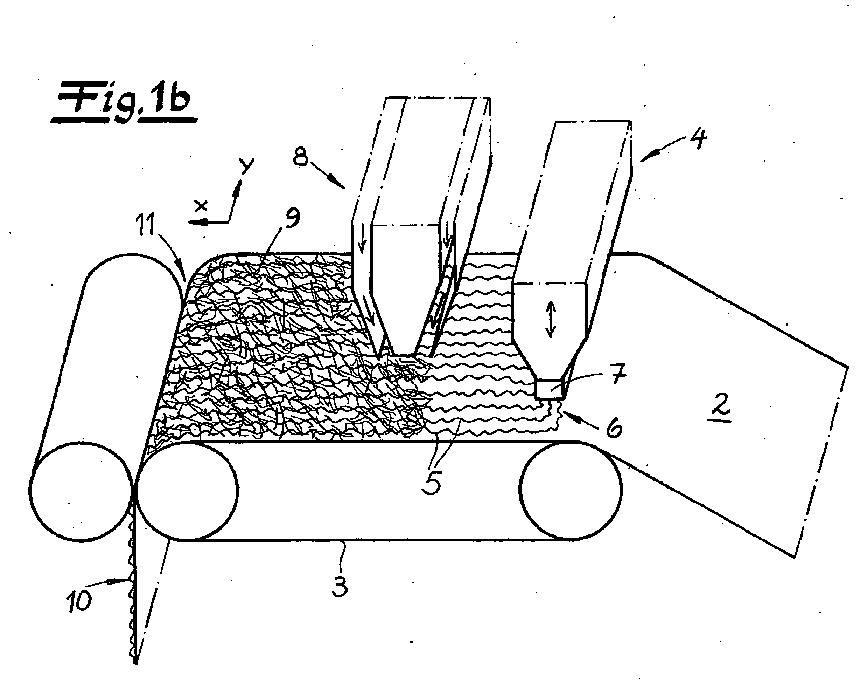

Eine Anlage zur Durchführung des erfindungsgemäßen Verfahrens ist in der Fig. 1 a dargestellt. Die Vorrichtung weist einen Flachfolienextruder 1 auf, mit dem eine elastische Folie 2 gebildet wird. Die gebildete Folie 2 wird unmittelbar nachfolgend einer Transporteinrichtung 3 in Form eines umlaufenden Bandes zugeführt, wobei das umlaufende Band der Führung und dem Transport der elastischen Folie 2 während der folgenden Verfahrensschritte dient. Durch das umlaufende Band wird insbesondere der Vortrieb der elastischen Folie 2 bei geringen Zugkräften ermöglicht, wobei die elastische Folie 2 zusätzlich von dem darunter liegenden Band abgestützt ist.

Die auf der Transporteinrichtung 3 abgelegte elastische Folie wird zunächst von einer Einrichtung 4 zum abschnittsweisen Auftrag von Klebstoff mit Streifen 5 eines Hotmeit-Klebstoffes 6 versehen.

Wie der Fig. 1b zu entnehmen ist, verlaufen die Streifen 5 in Längsrichtung X der Folie 2, wobei durch eine oszillierende Bewegung einer Austrittsdüse 7 der Einrichtung 4 ein wellenförmiger Verlauf erreicht wird. Die mit Hotmelt-Klebstoff 6 versehene elastische Folie 2 wird nachfolgend einer Meltblown-Vorrichtung 8 zugeführt. Die dort erzeugte Schicht 9 aus Meltblown-Nonwoven wird ohne vorherige Verfestigung unmittelbar auf die elastische Folie 2 abgelegt. Das gebildete Vliesverbundmaterial 10 wird nachfolgend durch einen Walzenspalt 11 geführt, wobei die Schicht 9 aus Meltblown-Nonwoven durch leichte Druckeinwirkung in den noch schmelzflüssigen Hotmelt-Klebstoff 6 hineingedrückt wird. Die auf das Vliesverbundmaterial 10 in dem Walzenspalt 11 wirkende Kraft ist dabei so gewählt, dass über die Befestigung hinausgehend keine Materialumformung durch Druck oder Temperatur erfolgt. Das gebildete Vliesverbundmaterial 10 wird nachfolgend auf einer Rolle 12 aufgewickelt.

Da die Streifen 5 aus Hotmeit-Klebstoff 6 und die Fasern der Schicht 9 aus Meltblown-Nonwoven im Wesentlichen in Folienlängsrichtung X ausgerichtet sind, zeichnet sich das gebildete Vliesverbundmaterial 10 durch eine sehr gute Dehnbarkeit in Querrichtung aus, die im Wesentlichen durch die elastischen Eigenschaften der elastischen Folie 2 bestimmt wird und allenfalls geringfügig durch die aufgebrachte Schicht 9 aus Meltblown-Nonwoven und den Hotmelt-Klebstoff 6 beeinträchtigt wird.

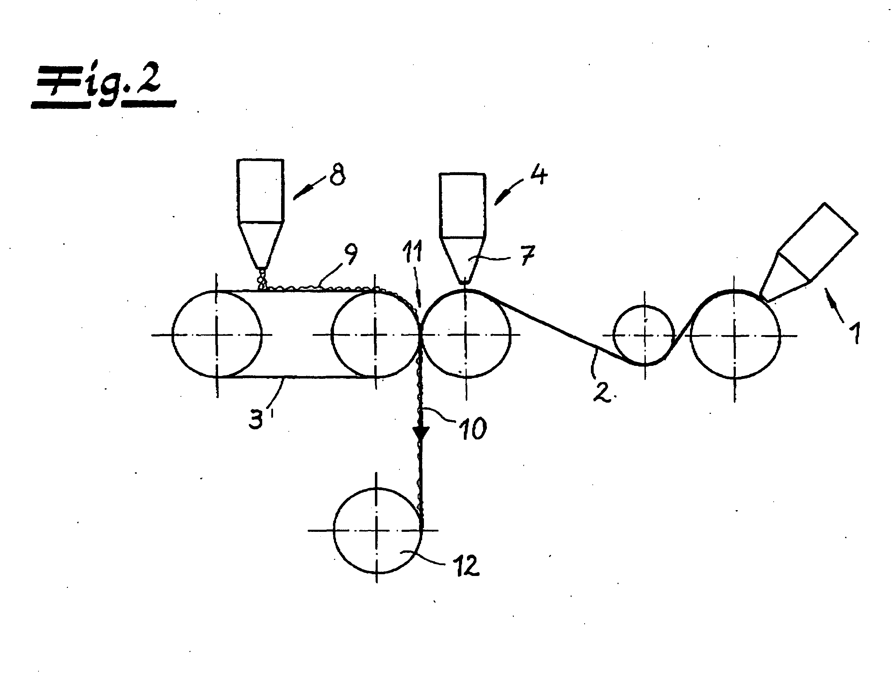

Fig. 2 zeigt eine alternative Ausgestaltung der Vorrichtung, wobei in Übereinstimmung mit Fig. 1 a mit einer Meltblown-Vorrichtung 8 eine Schicht 9 aus Meltblown-Nonwoven erzeugt wird. Diese wird aber nicht direkt auf die elastische Folie 2, sondern auf eine Transporteinrichtung 3' abgelegt. Die Transporteinrichtung 3' kann, wie in der Fig. 2 dargestellt, als umlaufendes Band oder als Walze ausgebildet sein. Mittels der Transporteinrichtung 3' wird die Schicht 9 aus Meltblown-Nonwoven weitgehend frei von Zugkräften der zuvor mit Hotmelt-Klebstoff 6 versehenen elastischen Folie 2 zugeführt und, wie auch bei der Ausführung gemäß Fig. 1a, in einem Walzenspalt 11 an den mit Hotmelt-Klebstoff 6 versehenen Abschnitten mit der elastischen Folie 2 verbunden.

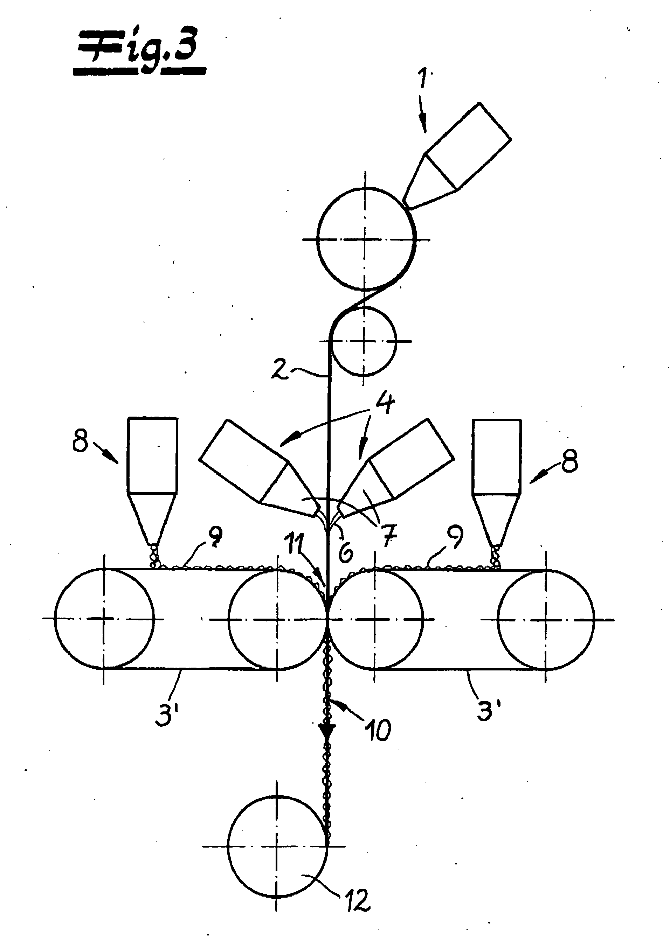

Gemäß der in Fig. 3 dargestellten Weiterbildung der Vorrichtung ist an beiden Seiten der elastischen Folie 2 eine Schicht 9 aus Meltblown-Nonwoven vorgesehen.

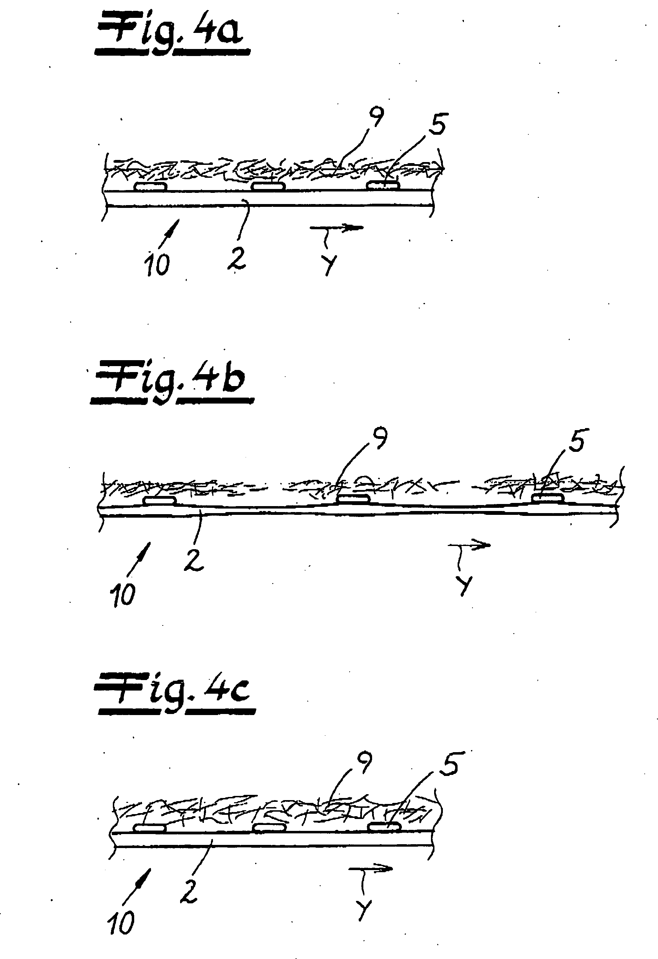

Die Fig. 4a bis 4c zeigen exemplarisch einen Abschnitt des mit dem erfindungsgemäßen Verfahren gefertigten Vliesverbundmaterials 10 in einer Schnittdarstellung in Querrichtung Y. Wie der Fig. 4a zu entnehmen ist, wird die gesamte elastische Folie 2 an einer Seite von der Schicht 9 aus Meltblown-Nonwoven abgedeckt. Bei einer Dehnung zerfasert das Meltblown-Nonwoven, das heißt, die Fasern richten sich aus und zerreißen, wobei die elastische Folie 2 zwischen den in Längsrichtung verlaufenden Klebstoffstreifen 5 bereichsweise freigegeben wird (Fig. 4b). Nach einem Wegfall der Zugkräfte und einer elastischen Rückstellung des Abschnittes des Vliesverbundmaterials 10 ist die elastische Folie 2 an einer Seite erneut vollständig, oder zumindest weitgehend vollständig, von den Fasern der Schicht 9 aus Meltblown-Nonwoven abgedeckt. Wie der Fig. 4c zu entnehmen ist, ist die Schicht 9 aus Meltblown-Nonwoven nach einer ersten Dehnung durch die Zerfaserung insgesamt voluminöser.

## Patentansprüche

1. Verfahren zur Herstellung eines elastischen Vliesverbundmaterials,
wobei eine elastische Folie (2) zugeführt und abschnittsweise mit Klebstoff versehen wird und
wobei mit einer Meltblown-Vorrichtung (8) eine Schicht (9) aus Meltblown-Nonwoven erzeugt wird und ohne vorherige Verfestigung unmittelbar auf die elastische Folie (2) abgelegt und durch den Klebstoff abschnittsweise mit der elastischen Folie (2) verbunden wird.

2. Verfahren zur Herstellung eines elastischen Vliesverbundmaterials,
wobei eine elastische Folie (2) zugeführt und abschnittsweise mit Klebstoff versehen wird,
wobei mit einer Meltblown-Vorrichtung (8) eine Schicht (9) aus Meltblown-Nonwoven erzeugt und ohne vorherige Verfestigung unmittelbar auf eine Transporteinrichtung (3') abgelegt wird und
wobei die Schicht (9) aus Meltblown-Nonwoven mittels der Transporteinrichtung (3') weitgehend frei von Zugkräften der elastischen Folie (2) zugeführt und durch den Klebstoff abschnittsweise mit der elastischen Folie (2) verbunden wird.

3. Verfahren nach Anspruch 2, wobei die Schicht (9) aus Meltblown-Nonwoven auf eine rotierende Walze oder ein umlaufendes Band als Transporteinrichtung (3') abgelegt wird und wobei die Schicht (9) aus Meltblown-Nonwoven von der Walze beziehungsweise dem Band unmittelbar auf die abschnittsweise mit Klebstoff versehene elastische Folie (2) aufgelegt wird.

4. Verfahren nach einem der Ansprüche 1 bis 3, wobei die elastische Folie (2) durch Flachfolienextrusion gebildet und direkt nachfolgend mit Klebstoff versehen wird, ohne zuvor auf- und abgewickelt zu werden.

5. Verfahren nach einem der Ansprüche 1 bis 4, wobei als Klebstoff ein Hotmelt-Klebstoff (6) auf die elastische Folie (2) aufgebracht wird.

6. Verfahren nach einem der Ansprüche 1 bis 5, wobei der Klebstoff in Streifen (5), die in Längsrichtung (X) der elastischen Folie (2) verlaufen, aufgebracht wird.

7. Verfahren nach einem der Ansprüche 1 bis 6, wobei die elastische Folie (2) beidseitig mit einer Schicht (9) aus Meltblown-Nonwoven versehen wird.

8. Vorrichtung zur Durchführung des Verfahrens nach einem der Ansprüche 1 bis 7, umfassend einen Flachfolienextruder (1) zur Bildung einer elastischen Folie (2), eine Einrichtung (4) zum abschnittsweisen Auftrag von Klebstoff und eine Meltblown-Vorrichtung (8), die derart angeordnet ist, dass eine Schicht (9) aus Meftblown-Nonwoven unmittelbar auf die elastische Folie (2) oder eine Transporteinrichtung (3') ablegbar ist.

9. Vorrichtung nach Anspruch 8, wobei die Meltblown-Vorrichtung (8) derart angeordnet ist, dass die gebildete Schicht (9) aus Mekblown-Nonwoven unmittelbar auf der elastischen Folie (2) ablegbar ist und wobei im Bereich der Meltblown-Vorrichtung (8) eine Transportvorrichtung (3) angeordnet ist.

## Claims

1. A method for the manufacture of an elastic composite fleece material, wherein
an elastic film (2) is supplied and provided with adhesive by sections, and wherein
a layer (9) of melt-blown non-woven material is generated with a meltblown device (8) and without prior solidification is immediately laid down onto the elastic film (2), and by means of the adhesive is bonded with the elastic film (2) by sections.

2. A method for the manufacture of an elastic composite fleece material, wherein
an elastic film (2) is supplied and provided with adhesive by sections, wherein
a layer (9) of melt-blown non-woven material is generated with a meltblown device (8) and without prior solidification is immediately laid down onto transport equipment (3'), and wherein
by means of the transport equipment (3') the layer (9) of melt-blown non-woven material is supplied to a large extent free of tensile forces in the elastic film (2), and by means of the adhesive is bonded with the elastic film (2) by sections.

3. The method in accordance with Claim 2, wherein the layer (9) of meltblown non-woven material is laid down onto a rotating roller, or a circulating belt, as transport equipment (3'), and wherein the layer (9) of melt-blown non-woven material is laid down immediately from the roller or belt onto the elastic film (2) provided by sections with adhesive.

4. The method in accordance with one of the Claims 1 to 3, wherein the elastic film (2) is formed by means of flat film extrusion and is then directly provided with adhesive, without previously having been wound or unwound.

5. The method in accordance with one of the Claims 1 to 4, wherein a hotmelt adhesive (6) is applied onto the elastic film (2) as the adhesive.

6. The method in accordance with one of the Claims 1 to 5, wherein the adhesive is applied in strips (5), which run in the longitudinal direction (X) of the elastic film (2).

7. The method in accordance with one of the Claims 1 to 6, wherein the elastic film (2) is provided on both sides with a layer (9) of melt-blown non-woven material.

8. A device for the execution of the method in accordance with one of the Claims 1 to 7, comprising a flat film extruder (1) for the formation of an elastic film (2), equipment (4) for the application of adhesive by sections, and a melt-blown device (8), which is arranged such that a layer (9) of melt-blown non-woven material can be laid down immediately onto the elastic film (2) or transport equipment (3').

9. The device in accordance with Claim 8, wherein the melt-blown device (8) is arranged such that the layer (9) of melt-blown non-woven material formed can be laid down immediately onto the elastic film (2), and wherein a transport device (3) is arranged in the region of the melt-blown device (8).

## Revendications

1. Procédé de fabrication d'un matériau composite non-tissé élastique,
dans lequel un film élastique (2) est acheminé et pourvu de colle par endroits et
au moyen d'un dispositif de fusion par soufflage (8), une couche (9) de non-tissé réalisé par fusion par soufflage est générée et déposée sans consolidation préalable sur le film élastique (2) et raccordée par endroits au film élastique (2) par la colle.

2. Procédé de fabrication d'un matériau composite non-tissé élastique,
dans lequel un film élastique (2) est acheminé et pourvu de colle par endroits et
au moyen d'un dispositif de fusion par soufflage (8), une couche (9) de non-tissé réalisé par fusion par soufflage est générée et déposée sans consolidation préalable directement sur un dispositif de transport (3') et
la couche (9) de non-tissé réalisé par fusion par soufflage est acheminée au moyen du dispositif de transport (3') en grande partie sans forces de traction vers le film élastique (2) et raccordée par endroits au film élastique (2) par la colle.

3. Procédé selon la revendication 2, dans lequel la couche (9) de non-tissé réalisé par fusion par soufflage est déposée sur un cylindre en rotation ou une bande tournante faisant office de dispositif de transport (3') et la couche (9) de non-tissé réalisé par fusion par soufflage est déposée directement par le cylindre ou la bande sur le film élastique (2) pourvu de colle par endroits.

4. Procédé selon une des revendications 1 à 3, dans lequel le film élastique (2) est constitué par extrusion de film plat et est ensuite pourvu directement de colle sans être préalablement enroulé et déroulé.

5. Procédé selon une des revendications 1 à 4, dans lequel on applique comme colle sur le film élastique (2) une colle thermofusible (6).

6. Procédé selon une des revendications 1 à 5, dans lequel la colle est appliquée en bandes (5) qui s'étendent dans le sens longitudinal (X) du film élastique (2).

7. Procédé selon une des revendications 1 à 6, dans lequel le film élastique (2) est pourvu sur ses deux faces d'une couche (9) de non-tissé réalisé par fusion par soufflage.

8. Dispositif de réalisation du procédé selon une des revendications 1 à 7, comprenant une extrudeuse de film plat (1) permettant de former un film élastique (2), un dispositif (4) d'application de colle par endroits et un dispositif de fusion par soufflage (8) qui est disposé de manière à ce qu'une couche (9) de non-tissé réalisé par fusion par soufflage puisse être déposée directement sur le film élastique (2) ou un dispositif de transport (3').

9. Dispositif selon la revendication 8, dans lequel le dispositif de fusion par soufflage (8) est disposé de manière à ce que la couche formée (9) de non-tissé réalisé par fusion par soufflage puisse être déposée directement sur le film élastique (2) et un dispositif de transport (3) est disposé au niveau du dispositif de fusion par soufflage (8).
